# EUROPEAN PATENT APPLICATION

(11) **EP 4 300 813 A1**
(43) Date of publication of application: **03.01.2024**
(21) Application number: 21927246.5
(22) Date of filing: 26.02.2021
(51) Int. Cl.: H02S 20/23

(54) **CONNECTING BEAM FOR SOLAR PHOTOELECTRIC SUPPORTING FRAME**

(71) Applicant: Sunny Rich Agric. & Biotech Co., Ltd., Taipei 106 (TW)
(72) Inventor: CHEN, Kuei-Kuang, Taipei City 106 (TW)
(74) Representative: Lang, Christian
(86) International application number: PCT/CN2021/078083
(87) International publication number: WO 2022/178808

(57) **Abstract**

A connecting beam for a solar photoelectric supporting frame. The connecting beam is a strip-shaped body manufactured from a hard material, and comprises a bottom plate portion, a first side plate portion, a second side plate portion, a first upper plate portion and a second upper plate portion, wherein the bottom plate portion is provided with a lower surface and an upper surface; the first side plate portion is obliquely disposed corresponding to the bottom plate portion; the second side plate portion is disposed on the other side of the bottom plate portion, and is opposite to the first side plate portion, the height of the second side plate portion is less than that of the first side plate portion, and the second side plate portion is obliquely disposed corresponding to the bottom plate portion; the first upper plate portion is provided with a first side and a second side that are opposite each other, the first side being connected to a top end of the first side plate portion, and the height of the second side being less than that of the first side; and the second upper plate portion is provided with a third side and a fourth side that are opposite each other, the third side being connected to a top end of the second side plate portion, and the height of the fourth side being greater than that of the third side.

## Description

### Technical Field

The present invention relates to a connecting beam for a solar photoelectric supporting frame and, more particularly, to a connecting beam which can provide a supporting structure while increasing assembly convenience and power generation efficiency.

### Background Technique

Solar energy is an energy cleaner than thermal power generation and nuclear power generation. The solar energy generation equipment mainly includes solar panels which can receive light and convert it into electricity. Furthermore, the solar panels are supported on a top end of a building, an empty ground, or a floating platform by a supporting frame from below, and the light receiving faces of the solar panels can be irradiated by the sunlight to generate power.

The conventional supporting frame below the solar panels is generally comprised plural vertical posts, plural transverse beams, and plural longitudinal beams. The vertical posts are fixed upright on the top end of a building, the ground, or any platform. Furthermore, the transverse beams and the longitudinal beams intersect with each other to form a frame on top of the vertical posts, and the solar panels can be installed on the frame. Furthermore, adjacent vertical posts may have different heights, such that the solar panels disposed on top of the frame may be oblique to achieve better water discharge effect and prevention of accumulation of dust.

However, the above structure must provide vertical posts of different lengths and then install the vertical posts in predetermined locations requiring desired heights. The assembly is not convenient. Furthermore, the rainwater will fall directly through gaps between the solar panels and affect the building below. Furthermore, the frame only provides the function of supporting the solar panels but cannot increase the power generation efficiency, providing low utility.

### Summary of the Invention

### Technical Problem

An objective of the present invention is to provide a connecting beam which can provide supporting while increasing assembly convenience and power generation efficiency.

### Solution of Problem

### Technical Solution

To achieve the above objective, the present invention discloses a connecting beam for a solar photoelectric supporting frame. The connecting beam is an elongated object made of rigid material and comprises: a bottom plate portion including a lower surface and an upper surface; a first side plate portion disposed on a side of the bottom plate portion, with the first side plate portion being obliquely disposed relative to the bottom plate portion and including a first inner surface at a side thereof adjacent to the upper surface of the bottom plate portion, with an angle between the first inner surface and the upper surface of the bottom plate portion being greater than 90 degrees; and with a reflective face capable of reflecting light being disposed on the first inner surface; a second side plate portion disposed on another side of the bottom plate portion and opposite to the first side plate portion, with the second side plate portion having a height smaller than the first side plate portion, being obliquely disposed relative to the bottom plate portion, and including a second inner surface at a side thereof adjacent to the upper surface of the bottom plate portion, with an angle between the second inner surface and the upper surface of the bottom plate portion being greater than 90 degrees, with a groove formed between the first side plate portion, the second side plate portion, and the bottom plate portion, and with a spacing between upper ends of the first side plate portion and the second side plate portion being greater than a spacing between lower ends of the first side plate portion and the second side plate portion; a first upper plate portion including opposite first and second sides, with the first side connected to a top end of the first side plate portion, with a height of the second side being lower than the first side; and a second upper plate portion including opposite third and fourth sides, with the third side connected to a top end of the second side plate portion, with a height of the fourth side being higher than the third side.

Furthermore, a reflective face capable of reflecting light is disposed on the second inner surface.

Furthermore, a reflective face capable of reflecting light is disposed on the upper surface.

Furthermore, the first side plate portion and the second side plate portion are mainly objects having planar shapes.

Furthermore, the first upper plate portion and the second upper plate portion are mainly objects having planar shapes, and the first upper portion and the second upper portion have corresponding obliqueness with respect to the bottom plate potion.

Furthermore, the bottom plate portion includes two ribs protruding upward, and a guiding groove is formed between the two ribs.

Furthermore, the supporting frame includes a plurality of the connecting beams, a plurality of vertical beams, and a plurality of vertical posts. The bottom plate portions of the connecting beams are disposed on top of the vertical beams of the supporting frame to form a frame structure. The vertical posts are disposed to lower ends of the vertical beams. Two sides of the solar panel are respectively assembled with the first upper plate portion and the second upper plate portion of the adjacent connecting beam.

Furthermore, the first inner surface is formed with the reflective face by spray painting, baking paint, electroplating, or bonding a reflective sticker.

Furthermore, the second inner surface is formed with the reflective face by spray painting, baking paint, electroplating, or bonding a reflective sticker.

Furthermore, the upper surface is formed with the reflective face by spray painting, baking paint, electroplating, or bonding a reflective sticker.

### Advantageous Effects of the Invention

### Advantageous Effects

By adopting the above solution, in the present invention, electricity can be generated when the sunlight is incident on the light receiving faces on upper sides of the solar panels. Furthermore, when the sunlight is incident on the first and second inner surfaces and the upper surface of the connecting beam, the sunlight can be reflected to the light receiving faces of the solar panels after single or multiple reflection, which can increase the power generation efficiency of the solar panels receiving light.

In the present invention, when it rains, since the solar panels are obliquely disposed, the rainwater can be guided by the solar panels into the groove of the connecting beam and then discharged via an end of the connecting beam or a water discharge port disposed on the connecting beam. This can prevent the rainwater from directly falling to a position below the solar panels, providing enhanced rainproof function.

The position of the groove of the connecting beam of the present invention may serve as a maintenance passage for repairmen. Furthermore, the guiding groove between the two ribs of the connecting beam may permit wheels of a cleaning cart to move along the guiding groove for cleaning the solar panels, providing the cleaning cart with the effect of stable movement and reliable cleaning of the solar panels.

### Brief Description of the Accompanying Drawings

### Description of the Accompanying Drawings

Figure 1 is a perspective view of a connecting beam of the present invention.
Figure 2 is a side view of the connecting beam of the present invention.
Figure 3 is a schematic view illustrating superimposition of plural connecting beams of the present invention.
Figure 4 is a schematic view illustrating assembly of a supporting frame of the present invention and solar panels.
Figure 5 is a schematic view illustrating power generation of the present invention by the solar panels which receive light.
Figure 6 is a schematic view illustrating guidance of water by the connecting beam of the present invention.
Figure 7 is a schematic view illustrating disposition of a cleaning cart on top of the connecting beam of the present invention.

### Reference number

1 connecting beam 11 bottom plate portion 111 lower surface
112 upper surface 113 rib 114 guiding groove
12 first side plate portion 121 first inner surface 13 second side plate portion
131 second inner surface 14 first upper plate portion 141 first side
142 second side 15 second upper plate portion 151 third side [0032] 152 fourth side 16 groove
2 vertical beam 3 vertical post 4 supporting frame
5 solar panel 5 light receiving face 6 cleaning cart

### Embodiments of the Invention

### Implementation of the Present Invention

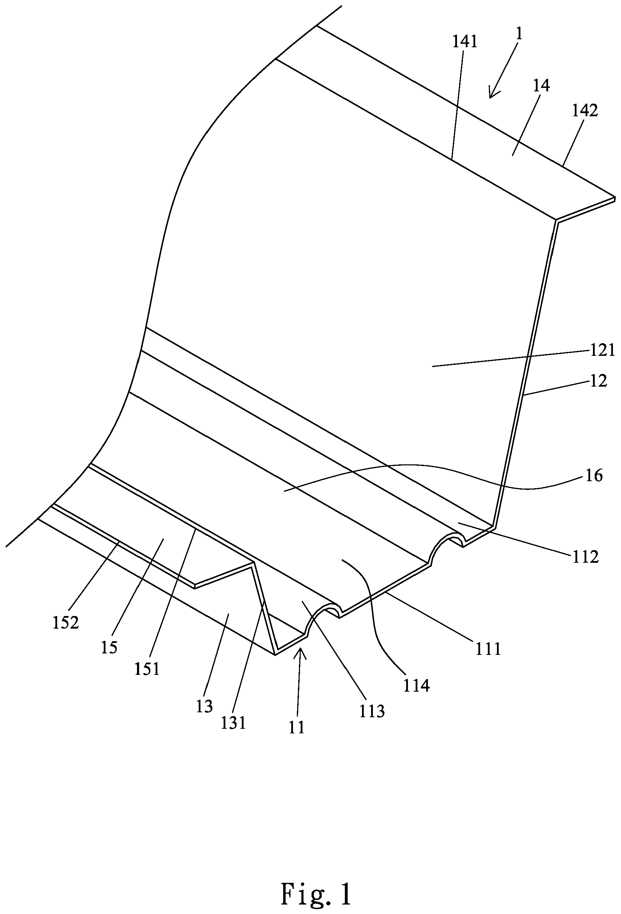

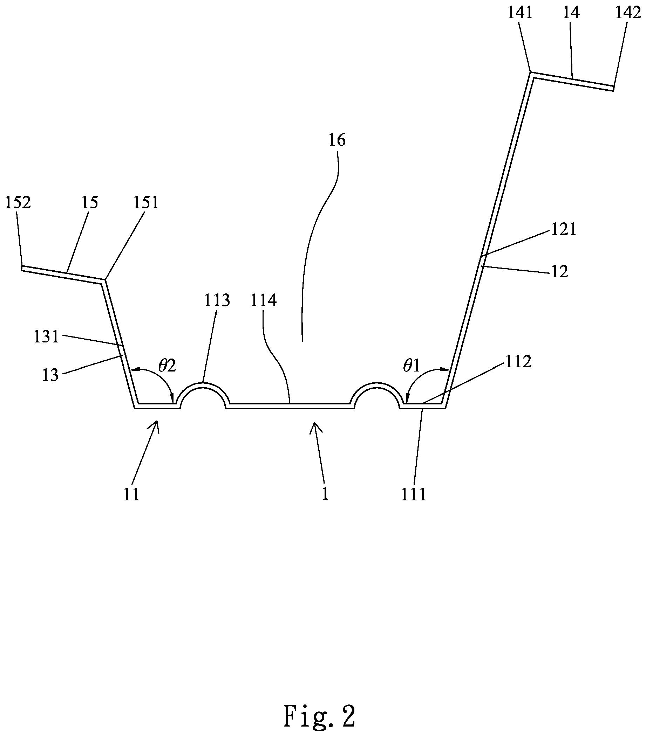

Please refer to Figures 1 to 4. A connecting beam 1 of the present invention is an elongated object made of metal, plastic material, or other rigid material and comprises a bottom plate portion 11, a first side plate portion 12, a second side plate portion 13, a first upper plate portion 14, and a second upper plate portion 15. The bottom plate portion 11 is mainly an object having planar shapes, includes a lower surface 111 and an upper surface 112, and can be assembled with a vertical beam 2 of a solar photoelectric supporting frame 4. The bottom plate portion 11 includes two ribs 113 protruding upward. A guiding groove 114 is formed between the two ribs 113. Furthermore, a reflective face capable of reflection is disposed on the upper surface 112 by spray painting, baking paint, electroplating, bonding a reflective sticker (not shown), or other suitable ways.

The first side plate portion 12 is an object having planar surfaces and has a bottom connected to a side of the bottom plate portion 11. The first side plate portion 12 is obliquely disposed relative to the bottom plate portion 11 and includes a first inner surface 121 at a side thereof adjacent to the upper surface 112 of the bottom plate portion 11. An angle θ1 between the first inner surface 121 and the upper surface 112 of the bottom plate portion 11 is greater than 90 degrees. Furthermore, a reflective face capable of reflecting light is disposed on the first inner surface 121 by spray painting, baking paint, electroplating, bonding a reflective sticker (not shown), or other suitable ways.

The second side plate portion 13 is an object having planar surfaces and is disposed on another side of the bottom plate portion 11 and opposite to the first side plate portion 12. The second side plate portion 13 has a height smaller than the first side plate portion 12, is obliquely disposed relative to the bottom plate portion 11, and includes a second inner surface 131 at a side thereof adjacent to the upper surface 112 of the bottom plate portion 11. An angle θ2 between the second inner surface 131 and the upper surface 112 of the bottom plate portion 11 is greater than 90 degrees. A groove 16 is formed between the first and second side plate portions 12, 13 and the bottom plate portion 11. A spacing between upper ends of the first and second side plate portions 12, 13 is greater than a spacing between lower ends of the first and second side plate portions 12, 13. Furthermore, a reflective face capable of reflecting light is disposed on the second inner surface 131 by spray painting, baking paint, electroplating, bonding a reflective sticker (not shown), or other suitable ways.

The first upper plate portion 14 is an object having planar surfaces and includes opposite first and second sides 141, 142. The first side 141 is connected to a top end of the first side plate portion 12. The height of the second side 142 is lower than the first side 141.

The second upper plate portion 15 is an object having planar surfaces and includes opposite third and fourth sides 151, 152. The third side 151 is connected to a top end of the second side plate portion 13. The height of the fourth side 152 is higher than the third side 151. Furthermore, the first and second upper plate portions 14, 15 have different heights and have corresponding obliqueness relative to the bottom plate portion 11.

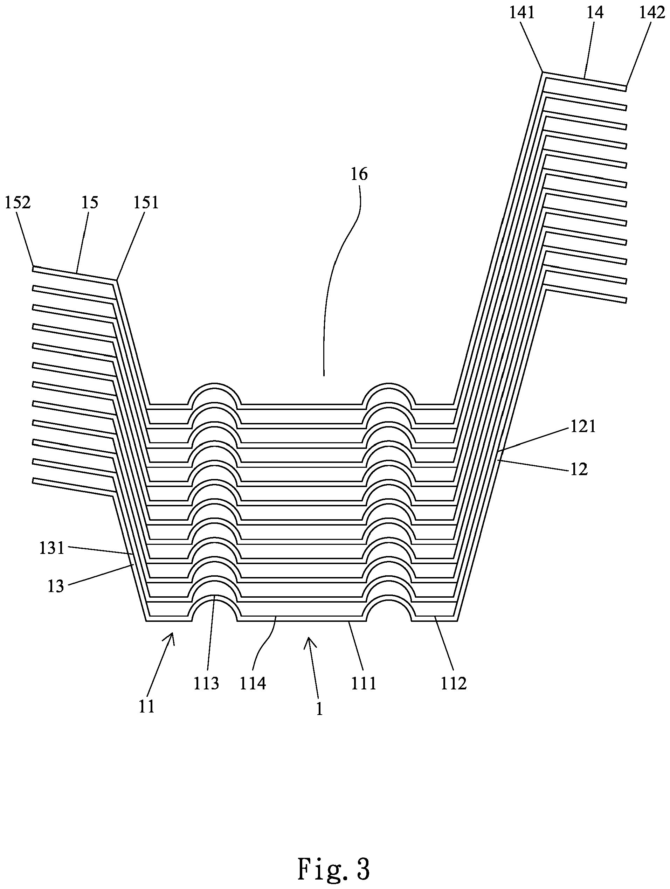

In the connecting beam 1 of the present invention, since the spacing between the upper ends of the first and second side plate portions 12, 13 is greater than the spacing between the lower ends of the first and second side plate portions 12, 13, plural connecting beams 1 can be superimposed one upon another, as shown in Figure 3, which can reduce the storage space while permitting easy loading and transportation.

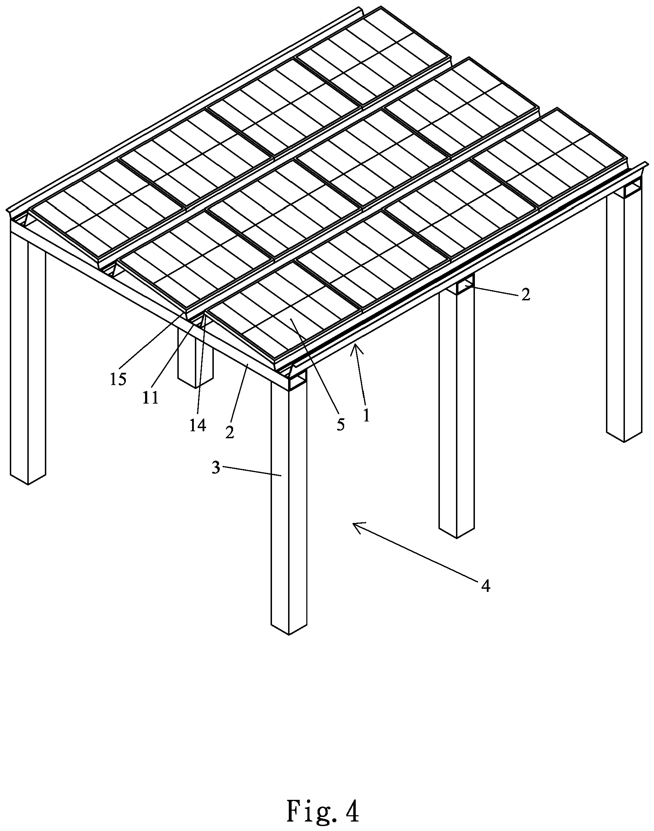

With reference to Figure 4, the bottom plate portions 11 of the connecting beams 1 of the present invention can be disposed on top of the vertical beams 2 of the solar photoelectric supporting frame 4 and then assembled by assembling components or welding (not shown) to form a frame structure. Vertical posts 3 can be disposed to lower ends of the vertical beams 2, such that the connecting beams 1, the vertical beams 2, and the vertical posts 3 form the supporting frame 4. Furthermore, two sides of the solar panel 5 can be respectively assembled with the first upper plate portion 14 and the second upper plate portion 15 of the adjacent connecting beam 1. After assembly, the solar panels 5 may be obliquely disposed relative to the vertical beams 2 without vertical posts 3 of different heights. Furthermore, the solar panels 5 can be spaced from each other by the connecting beams 1.

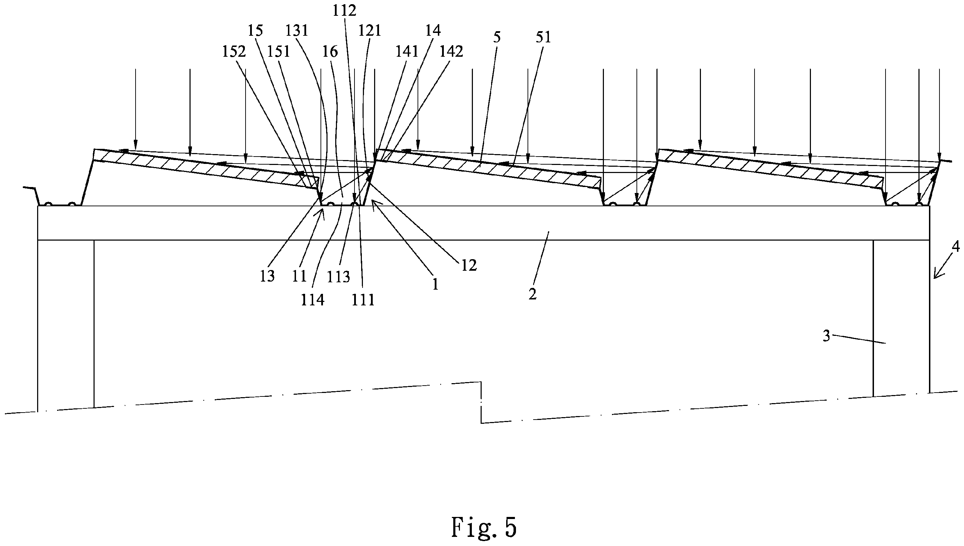

With reference to Figure 5, electricity can be generated when the sunlight is incident on the light receiving faces 51 on the upper sides of the solar panels 5. Furthermore, when the sunlight is incident on the first and second inner surfaces 121, 131 and the upper surface 112 of the connecting beam 1, the sunlight can be mainly reflected to the light receiving faces 51 of the solar panels 5 after single reflection by the first inner surface 112 or multiple reflection by the first and second inner surfaces 121, 131 and the upper surface 112, which can increase the power generation efficiency of the solar panels 5 receiving light.

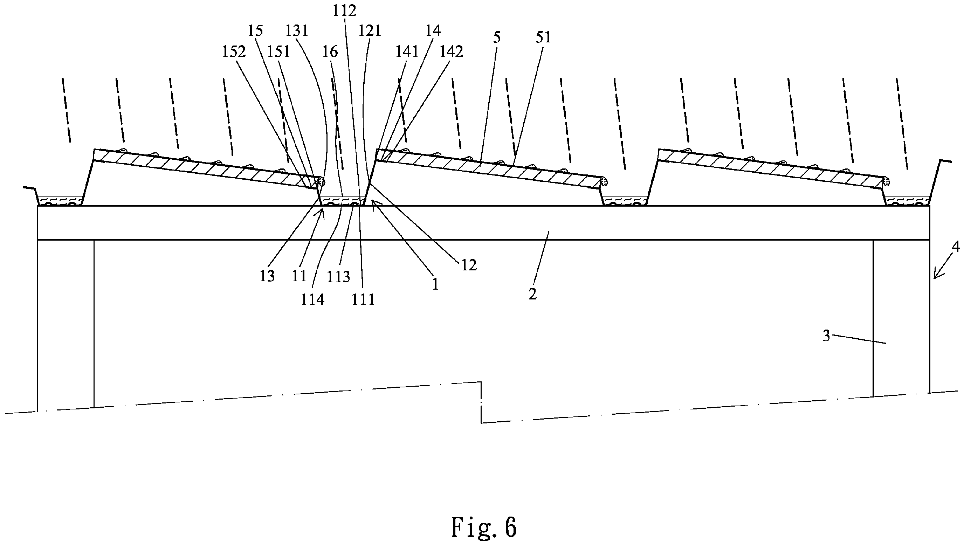

With reference to Figure 6, in the present invention, when it rains, since the solar panels 5 are obliquely disposed, the rainwater can be guided by the solar panels 5 into the groove 16 of the connecting beam 1 and then discharged via an end of the connecting beam 1 or a water discharge port (not shown) disposed on the connecting beam 1. This can prevent the rainwater from directly falling to a position below the solar panels 5, providing enhanced rainproof function.

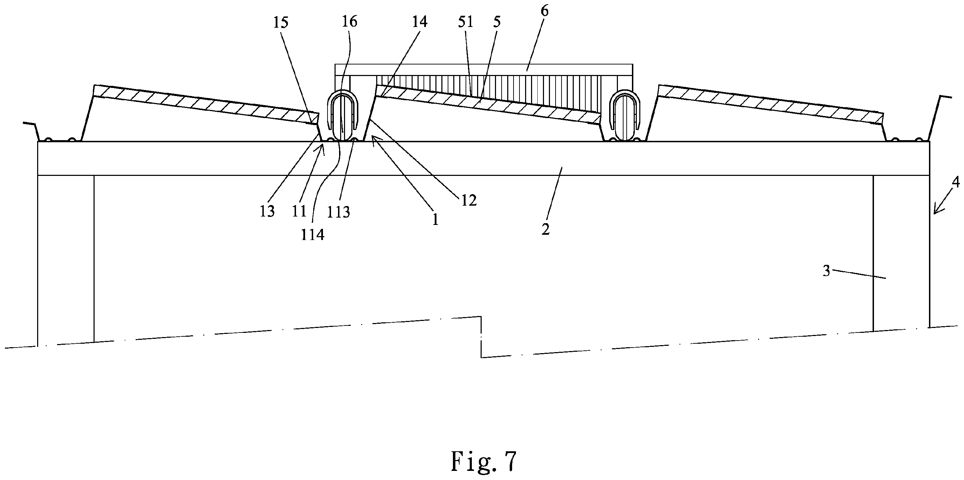

With reference to Figure 7, the position of the groove 16 of the connecting beam 1 of the present invention may serve as a maintenance passage for repairmen. Furthermore, the guiding groove 114 between the two ribs 113 of the connecting beam 1 may permit wheels of a cleaning cart 6 to move along the guiding groove 114 for cleaning the solar panels 5, providing the cleaning cart 6 with the effect of stable movement and reliable cleaning of the solar panels 5.

Therefore, based on the above description, the connecting beam of the present invention has the effects of support, increasing the power generation efficiency, and rainproof. Furthermore, the foregoing embodiments are examples of the present invention, not limitation to the present invention. All equivalent changes made in accordance with the spirit of the present invention should also fall within the scope of the present invention.

## Claims

1. A connecting beam for a solar photoelectric supporting frame, **characterized in that** the connecting beam is an elongated object made of rigid material and comprises: a bottom plate portion including a lower surface and an upper surface; a first side plate portion disposed on a side of the bottom plate portion, with the first side plate portion being obliquely disposed relative to the bottom plate portion and including a first inner surface at a side thereof adjacent to the upper surface of the bottom plate portion, with an angle between the first inner surface and the upper surface of the bottom plate portion being greater than 90 degrees; and with a reflective face capable of reflecting light being disposed on the first inner surface; a second side plate portion disposed on another side of the bottom plate portion and opposite to the first side plate portion, with the second side plate portion having a height smaller than the first side plate portion, being obliquely disposed relative to the bottom plate portion, and including a second inner surface at a side thereof adjacent to the upper surface of the bottom plate portion, with an angle between the second inner surface and the upper surface of the bottom plate portion being greater than 90 degrees, with a groove formed between the first side plate portion, the second side plate portion, and the bottom plate portion, and with a spacing between upper ends of the first side plate portion and the second side plate portion being greater than a spacing between lower ends of the first side plate portion and the second side plate portion; a first upper plate portion including opposite first and second sides, with the first side connected to a top end of the first side plate portion, with a height of the second side being lower than the first side; and a second upper plate portion including opposite third and fourth sides, with the third side connected to a top end of the second side plate portion, with a height of the fourth side being higher than the third side.

2. The connecting beam for the solar photoelectric supporting frame as set forth in claim 1, **characterized in that** a reflective face capable of reflecting light is disposed on the second inner surface.

3. The connecting beam for the solar photoelectric supporting frame as set forth in claim 1, **characterized in that** a reflective face capable of reflecting light is disposed on the upper surface.

4. The connecting beam for the solar photoelectric supporting frame as set forth in claim 1, **characterized in that** the first side plate portion and the second side plate portion are mainly objects having planar shapes.

5. The connecting beam for the solar photoelectric supporting frame as set forth in claim 1, **characterized in that** the first upper plate portion and the second upper plate portion are mainly objects having planar shapes, and the first upper portion and the second upper portion have corresponding obliqueness with respect to the bottom plate potion.

6. The connecting beam for the solar photoelectric supporting frame as set forth in claim 1, **characterized in that** the bottom plate portion includes two ribs protruding upward, and a guiding groove is formed between the two ribs.

7. The connecting beam for the solar photoelectric supporting frame as set forth in claim 1, **characterized in that** the supporting frame includes a plurality of the connecting beams, a plurality of vertical beams, and a plurality of vertical posts, the bottom plate portions of the connecting beams are disposed on top of the vertical beams of the supporting frame to form a frame structure, the vertical posts are disposed to lower ends of the vertical beams, and two sides of the solar panel are respectively assembled with the first upper plate portion and the second upper plate portion of the adjacent connecting beam.

8. The connecting beam for the solar photoelectric supporting frame as set forth in claim 1, **characterized in that** the first inner surface is formed with the reflective face by spray painting, baking paint, electroplating, or bonding a reflective sticker.

9. The connecting beam for the solar photoelectric supporting frame as set forth in claim 2, **characterized in that** the second inner surface is formed with the reflective face by spray painting, baking paint, electroplating, or bonding a reflective sticker.

10. The connecting beam for the solar photoelectric supporting frame as set forth in claim 3, **characterized in that** the upper surface is formed with the reflective face by spray painting, baking paint, electroplating, or bonding a reflective sticker.
